# EUROPÄISCHE PATENTSCHRIFT

(11) **EP 2 925 588 B1**
(45) Veröffentlichungstag und Bekanntmachung des Hinweises auf die Patenterteilung: **14.03.2018**
(21) Anmeldenummer: 13795452.5
(22) Anmeldetag: 19.11.2013
(51) Int. Cl.: B61G 11/12, F16F 9/48

(54) **VORRICHTUNG ZUM ABDÄMPFEN VON DRUCKKRÄFTEN**
DEVICE FOR DAMPING PRESSURE FORCES
DISPOSITIF D'AMORTISSEMENT DE FORCES DE COMPRESSION

(30) Priorität: 28.11.2012 DE 102012111516
(43) Veröffentlichungstag der Anmeldung: 07.10.2015
(73) Patentinhaber: Voith Patent GmbH, 89522 Heidenheim (DE)
(72) Erfinder: MOMBOUR, Klaus, 47447 Moers (DE); RADEWAGEN, Christian, 38228 Salzgitter (DE); RATHNER, Hubert, 38304 Wolfenbüttel (DE)
(74) Vertreter: Rupprecht, Kay
(86) Internationale Anmeldenummer: PCT/EP2013/074161
(87) Internationale Veröffentlichungsnummer: WO 2014/082895

(56) Entgegenhaltungen:
- EP-A2- 1 169 207
- DE-A1- 2 015 016
- DE-A1- 2 047 850
- FR-A5- 2 076 727
- US-A- 2 994 442

## Beschreibung

Die vorliegende Erfindung betrifft eine Vorrichtung zum Abdämpfen von Druckkräften in Form einer auch bei dynamischer Stoßbelastung reversibel ausgestalteten Stoßsicheru ng.

Eine solche Vorrichtung ist aus der FR-A5-2 076 727 oder aus der DE-A1 -2 015 016 bekannt. Aus der Schienenfahrzeugtechnik ist es bekannt, zwischen den einzelnen Wagenkästen eines mehrgliedrigen Fahrzeuges Stoßsicherungen, z.B. in Gestalt von sogenannten Stoßfängern, einzusetzen. Diese Bauelemente sind derart konstruiert, dass sie im Falle eines Zusammenstoßens mit einem festen oder einem beweglichen Hindernis, beispielsweise einem weiteren Wagenkasten, Energie aufnehmen und dadurch Beschädigungen am Fahrzeug oder der Ladung verhindern sollen. Derartige Stoßfänger finden vor allem an Schienenfahrzeugen Verwendung, wobei meistens ein oder zwei an den Stirnseiten angebrachte Konstruktionsteile eingesetzt werden, die den Zweck haben, die auf das Schienenfahrzeug in dessen Längsrichtung von außen einwirkenden waagerechten Druckkräfte aufzunehmen.

Hierbei kommen im Wesentlichen zwei Arten von Stoßfängern an Schienenfahrzeugen zum Einsatz. Sogenannte Zentralpuffer stellen eine Stoßsicherung dar, welche in der Längsachse des Fahrzeuges angeordnet ist, so dass sich an jeder Stirnseite des Schienenfahrzeuges nur ein Puffer in der Mitte der Kopfschwelle befindet. Weiterhin sind sogenannte Seitenpuffer bekannt, bei welchen sich jeweils zwei Puffer an der Stirnseite des Schienenfahrzeuges befinden.

Die Druckschrift DE 10 2007 057 574 B3 betrifft eine Feder-Dämpfer-Einheit eines Druckstöße dämpfenden Stoßreduzierelements. Die bekannte Feder-Dämpfer-Einheit weist ein Überlastventil auf, welches ein Überströmen von Hydraulikflüssigkeit aus einem hinteren Hydraulikkammerbereich in einen vorderen Hydraulikkammerbereich ermöglicht. Um die Strömungsgeschwindigkeit der Hydraulikflüssigkeit vom hinteren Hydraulikbereich in Richtung eines Überströmbereichs zu kontrollieren, ist ferner ein Drosseldorn vorgesehen, wie er im Einzelnen in der Druckschrift DE 20 2007 003 562 U1 beschrieben ist.

Die Druckschrift EP 1 169 207 B1 betrifft einen Zug-/Druck-Puffer für Anhängevorrichtungen an Schienen- und Radfahrzeugen. Der aus diesem Stand der Technik bekannte Zug-/Druck-Puffer weist ein Gehäuse und ein einseitig aus diesem herausragendes Kolbenelement auf, welches aus einer Nullstellung heraus jeweils gegen den Widerstand einer Federeinrichtung und einer Dämpfungseinrichtung in zwei Richtungen bewegbar ist.

Die Druckschrift DE 2 047 850 A betrifft einen energieabsorbierenden Stoßdämpfer, insbesondere einen hydraulischen Puffer für Schienenfahrzeuge.

Aus der Druckschrift US 3,139,989 ist ein Seitenpuffer für Schienenfahrzeuge bekannt.

Aus der Schienfahrzeugtechnik ist bekannt, beispielsweise bei einem mehrgliedrigen Schienenfahrzeug die einzelnen Wagenkästen mit Seitenpuffern ("UIC-Puffern") auszurüsten, wenn die Wagenkästen nicht über ein Drehgestell miteinander verbunden sind und somit im Fahrbetrieb der Abstand zweier miteinander gekoppelter Wagenkästen variieren kann. Derartige Seitenpuffer dienen dazu, die im normalen Fahrbetrieb beispielsweise beim Abbremsen auftretenden Stöße aufzunehmen und abzudämpfen.

Um sowohl ein gutes Einfederverhalten des Puffers bei quasistatischem Einfedern als auch bei dynamischer Beanspruchung zu erreichen, ist es bekannt, sogenannte gashydraulische Dämpfungseinrichtungen einzusetzen, welche aus einer Kombination einer Gasdruckfeder mit einem hydraulischen Überströmsystem bestehen. Bei statischem bzw. quasistatischem Einfedern eines solchen herkömmlichen gashydraulischen Puffers wird Füllgas, in der Regel Stickstoff, innerhalb des Gasdruckfederteils des Puffers komprimiert und erzeugt so eine Gegenkraft auf den Pufferteller. Bei Nachlassen der von außen auf den Puffer einwirkenden Kraft bewirkt die Gasfeder somit durch anschließende Expansion des Füllgases den sogenannten Rückhub, also Wiederausfedern des Puffers.

Bei dynamischer Beanspruchung eines solchen herkömmlichen gashydraulischen Dämpfers sorgt zusätzlich durch einen Drosselspalt strömendes Hydrauliköl bzw. anderweitige Hydraulikflüssigkeit dafür, dass durch den während des Strömungsvorganges auftretenden Druckabfall über dem Drosselspalt eine einer dynamischen Kraftkurve folgende hydraulische Gegenkraft erzeugt wird, welche gegen die die Einfederung bewirkende Stoßkraft wirkt.

Bei derartigen bekannten gashydraulischen Dämpferkombinationen ist es als problematisch anzusehen, dass diese in der Regel lediglich zur Aufnahme von Stößen im Normalbetrieb eines Schienenfahrzeugs ausgelegt sind. Im Einzelnen lassen sich dadurch zwar Stöße im Normalbetrieb reversibel auffangen, jedoch mangelt es an einer Lösung, um auch die im Crashfall auftretenden weitaus höheren Stoßkräfte reversibel auffangen zu können. In diesem Zusammenhang ist es bislang beispielsweise üblich, zu hohe Stoßkräfte durch destruktive Energieverzehrelemente aufzunehmen. Insbesondere kann es sich dabei um destruktive Verformungsrohre handeln, welche die im Crashfall auftretenden Stoßenergien in Verformungsenergie umwandeln und folglich nach jedem Einsatz erneuert werden müssen.

Die aus dem Stand der Technik bekannten gashydraulischen Dämpferkombinationen weisen ferner häufig sehr große Dimensionen auf, um ein Auffangen aller im Normalbetrieb und im Crashfall auftretender Stoßenergien zu gewährleisten.

Aufgrund obenstehender Problemstellung liegt der vorliegenden Erfindung die Aufgabe zugrunde, eine Vorrichtung anzugeben, welche dazu ausgebildet ist, Stöße im Normalbetrieb sowie im Überlastfall zuverlässig und reversibel abzufangen. Es ist ferner Aufgabe der vorliegenden Erfindung, eine Vorrichtung anzugeben, welche einen reduzierten Einbauraum im Vergleich zu bekannten Vorrichtungen zum Dämpfen von Druckkräften aufweist.

Diese Aufgabe wird erfindungsgemäß durch eine Vorrichtung zum Abdämpfen von Druckkräften gemäß dem unabhängigen Patentanspruch 1 gelöst.

Demgemäß betrifft die Erfindung eine Vorrichtung zum Abdämpfen von Druckkräften mit einem Zylinder, insbesondere Kreiszylinder, in welchem eine Hydraulikkammer ausgebildet ist. Die Vorrichtung weist ferner einen relativ zum Zylinder teleskopartig entlang einer Mittenachse verschiebbaren Hohlkolben auf, an dessen einen Endbereich eine Ventilanordnung zum Unterteilen der Hydraulikkammer in einen hinteren Hydraulikkammerbereich und einen vorderen Hydraulikkammerbereich ausgebildet ist. Ein Trennkolben ist im Hohlkolben entlang der Mittenachse beweglich angeordnet, wobei der Trennkolben einen innerhalb des Hohlkolbens gebildeten Gasraum von dem vorderen Hydraulikkammerbereich trennt.

Die an einem Endbereich des Hohlkolbens ausgebildete Ventilanordnung weist einen mit dem hinteren Hydraulikkammerbereich verbundenen Überströmbereich auf, welcher derart ausgebildet ist, dass Hydraulikflüssigkeit von dem hinteren Hydraulikkammerbereich in den vorderen Hydraulikkammerbereich strömen kann. Zur Kontrolle der Strömungsgeschwindigkeit der Hydraulikflüssigkeit vom hinteren Hydraulikkammerbereich in Richtung des Überströmbereichs ragt ein Drosseldorn in einen Verbindungsbereich zwischen dem hinteren Hydraulikkammerbereich und dem Überströmbereich hinein. Der erwähnte Drosseldorn ist von einem ersten Zustand, in welchem Hydraulikflüssigkeit vom hinteren Hydraulikkammerbereich in den Überströmbereich strömen kann, in einen zweiten Zustand, in welchem der hintere Hydraulikkammerbereich fluiddicht vom Überströmbereich getrennt ist, überführbar. Mit anderen Worten Hydraulikflüssigkeit kann nur im ersten Zustand des Drosseldorns vom hinteren Hydraulikkammerbereich in den vorderen Hydraulikkammerbereich übertreten.

Zusätzlich weist die an einem Endbereich des Hohlkolbens ausgebildete Ventilanordnung ein Überlastventil auf, welches über mindestens einen Überlastkanal in Verbindung mit dem hinteren Hydraulikkammerbereich steht. Das Überlastventil ist vorzugsweise derart ausgebildet, dass im geöffneten Zustand des Überlastventils ein Überlast-Durchlassspalt ein Überströmen von Hydraulikflüssigkeit aus dem hinteren Hydraulikkammerbereich in den vorderen Hydraulikkammerbereich ermöglicht. Das Überlastventil kann insbesondere nur dann in den geöffneten Zustand überführt werden, solange der Drosseldorn in seinem zweiten Zustand ist.

Die erfindungsgemäße Vorrichtung zum Dämpfen von Druckkräften weist eine ganze Reihe von Vorteilen auf. So ist es durch die Kombination des Überströmbereichs in Verbindung mit dem Drosseldorn und dem Überlastventil auf einfache Weise möglich, ein Absorbieren sowohl der im Normalbetrieb als auch der im Crashfall auftretenden Stoßenergien zu gewährleisten. Im Einzelnen kann die besondere Anordnung des Überströmbereichs und des damit zusammenwirkenden Drosseldorns dazu verwendet werden, die im Normalbetrieb hervorgerufenen Belastungen abzudämpfen und gleichzeitig einen vorgegebenen ersten Hub nicht zu überschreiten. Sobald die Stoßenergie einen vorab festlegbaren Grenzwert überschreitet, wird der Drosseldorn von seinem ersten Zustand in seinen zweiten Zustand überführt, in welchem der hintere Hydraulikkammerbereich fluiddicht vom Überströmbereich getrennt ist. Dementsprechend kann nunmehr kein Energieverzehr über den Drosseldorn erfolgen. Vielmehr werden unplanmäßig hohe Stoßenergien über das Überlastventil abgedämpft, welches ebenfalls Teil der Ventilanordnung ist. Zur Aufnahme von im Crashfall auftretender Stoßenergien steht also ein zweiter Hub zur Verfügung, welcher dazu führt, dass mehr Energie absorbiert werden kann, als es durch den ersten Hub allein möglich wäre.

Selbstverständlich sind sämtliche Energieverzehrelemente der Ventilanordnung reversibel ausgebildet, wodurch ein Austausch von Bauteilen der erfindungsgemäßen Vorrichtung zum Abdämpfen von Druckkräften selbst im Überlastfall nicht nötig ist. Ferner weist die erfindungsgemäße Vorrichtung zum Abdämpfen von Druckkräften besonders geringe Ausmaße auf, da auf voluminöse destruktive Energieverzehrelemente, wie beispielsweise Verformungsrohre, verzichtet werden kann und stattdessen lediglich ein minimal größerer hinterer Hydraulikkammerbereich benötigt wird.

Vorteilhafte Weiterbildungen der erfindungsgemäßen Vorrichtung zum Abdämpfen von Druckkräften sind den Unteransprüchen zu entnehmen.

So ist in einer ersten Realisierung der erfindungsgemäßen Vorrichtung zum Abdämpfen von Druckkräften vorgesehen, dass der Drosseldorn einen Hohlraum zur Aufnahme von Hydraulikflüssigkeit im Inneren des Drosseldorns sowie mindestens eine erste Radialbohrung an einem proximalen Ende des Hohlraums aufweist. Die mindestens eine erste Radialbohrung ist insbesondere dazu ausgelegt, im ersten Zustand des Drosseldorns ein Überströmen von Hydraulikflüssigkeit von dem hinteren Hydraulikkammerbereich in den Hohlraum zu ermöglichen. Durch die Ausgestaltung des Drosseldorns mit einem Hohlraum zur Aufnahme von Hydraulikflüssigkeit kann der Platzbedarf für den Überströmbereich verringert werden. Dadurch ist es möglich die Dimensionen der erfindungsgemäßen Vorrichtung weiter zu verringern. Gemäß dieser Ausführungsform strömt die aus dem hinteren Hydraulikkammerbereich verdrängte Hydraulikflüssigkeit durch die mindestens eine erste Radialbohrung in den Hohlraum des Drosseldorns und tritt danach in den Überströmbereich über. Während des Strömungsvorganges tritt ein Druckabfall über der mindestens einen ersten Radialbohrung auf, welcher eine einer dynamischen Kraftkurve folgende hydraulische Gegenkraft erzeugt, welche wiederum gegen die Stoßkraft wirkt. Der resultierende Druckabfall hängt primär von der Anzahl und dem Durchmesser der mindestens einen ersten Radialbohrung ab. Somit ist es gemäß dieser Realisierung auf einfache Weise möglich, den Dämpfungsgrad sehr genau einzustellen.

Gemäß einer weiteren Umsetzung der erfindungsgemäßen Vorrichtung zum Abdämpfen von Druckkräften weist der Hohlraum des Drosseldorns an einem distalen Ende ein lösbares Verschlusselement auf, welches ausgelegt ist, den Hohlraum des Drosseldorns gegenüber dem Überströmbereich der Ventilanordnung verschließbar auszugestalten. Durch das optionale Verschlusselement kann der Strömungswiderstand zwischen dem hinteren Hydraulikkammerbereich und dem vorderen Hydraulikkammerbereich weiter erhöht werden. Ferner wird durch das Vorsehen des lösbaren Verschlusselements eine weitere Reduzierung der Dimension der erfindungsgemäßen Vorrichtung erreicht, da der Überströmbereich gemäß dieser Ausgestaltung platzsparender ausgeführt werden kann, wie dies im weiteren Verlauf näher erläutert werden wird.

Der Drosseldorn kann zusätzlich zur mindestens einen ersten Radialbohrung ferner mindestens eine zweite Radialbohrung zwischen dem distalen und dem proximalen Ende des Hohlraums aufweisen. Dabei ist die mindestens eine zweite Radialbohrung ausgelegt, im ersten Zustand des Drosseldorns ein Überströmen von Hydraulikflüssigkeit von dem Hohlraum in den Überströmbereich zu ermöglichen. Dies ist insbesondere dann von Vorteil, wenn - wie oben bereits erwähnt - der Hohlraum durch ein lösbares Verschlusselement abgeschlossen ist. Mit anderen Worten, die mindestens eine zweite Radialbohrung stellt ein zweites Dämpfungselement dar, dessen Durchmesser wiederum in direktem Zusammenhang mit dem Druckabfall der Hydraulikflüssigkeit steht. Selbstverständlich kann es sich bei der mindestens einen zweiten Radialbohrung alternativ auch um Schlitze oder sonstige Öffnungen handeln, welche ein Durchströmen von Hydraulikflüssigkeit ermöglichen.

Gemäß einer weiteren Ausführungsform wird das Überlastventil mittels einer Feder, vorzugsweise einer Ringfeder, in seinen Ventilsitz gepresst. Diese Lösung hat den Vorteil, dass mit sehr einfachen und effektiven Mitteln konstruktionsseitig die Vorspannkraft, auch Schaltkraft genannt, die zum Auslösen des Überlastventils notwendig ist, vorgegeben werden kann. Die Vorspannkraft, welche das Überlastventil in seinen Ventilsitz hält, ist in der Regel um ein Vielfaches höher als die Kraft, welche sich aufgrund der Druckdifferenz zwischen dem hinteren Hydraulikkammerbereich, dem Überströmbereich und dem vorderen Hydraulikkammerbereich während der normalen Betriebszustände, d.h. im regulären Fahrbetrieb oder Rangierbetrieb der Wagenkästen ergibt. Ein Überlastfall, welcher einen extremen Druckanstieg innerhalb der hinteren Hydraulikkammer und somit auch im Überlastkanal nach sich zieht, kann sich beispielsweise bei unfallbedingten Zusammenstößen des Schienenfahrzeugs mit einem Hindernis ergeben. In diesem Fall wird das Überlastventil gegen die Vorspannkraft aus seinem Ventilsitz herausgedrückt und gibt eine direkte Überströmmöglichkeit für die Hydraulikflüssigkeit aus dem hinteren Hydraulikkammerbereich in den vorderen Hy-draulikkammerbereich frei.

Das Überlastventil kann insbesondere als Kugelrückschlagventil ausgebildet sein. Dabei werden die Kugeln mit einer Art Kugelkäfig mit Hilfe der oben genannten Feder, insbesondere Ringfeder, in den Ventilsitz gedrückt. Werden die Hydraulikdruckkräfte höher als die Federvorspannung, so öffnet die Kugel, wodurch selbst bei kleinen Ringfederwegen große Querschnitte freigegeben werden. Das Kugelrückschlagventil bietet folglich den Vorteil, dass selbst extrem hohe Stoßkräfte schnell und zuverlässig abgeführt werden.

Selbstverständlich ist es von Vorteil, wenn die zum Öffnen des Überlastventils erforderliche Schaltkraft vorab festlegbar ist. Diese kann beispielsweise durch die Vorspannkraft der oben bereits erwähnten Feder, vorzugsweise Ringfeder, bestimmt werden. Die Schaltkraft des Überlastventils wird vorzugsweise derart gewählt, dass dieses lediglich bei unplanmäßig hohen Stoßgeschwindigkeiten (beispielsweise im Crashfall) überschritten wird. Somit wird gewährleistet, dass das Überlastventil im Normalbetrieb im geschlossenen Zustand verharrt und lediglich im Crashfall dem hinteren Hydraulikkammerbereich mit dem vorderen Hydraulikkammerbereich über den Überlastkanal verbindet.

Des Weiteren ist vorgesehen, dass die Ventilanordnung ferner ein Rückschlagventil, insbesondere ein Kugelrückschlagventil, aufweist, wobei das Rückschlagventil derart angeordnet ist, dass ein Rückströmen der Hydraulikflüssigkeit aus dem vorderen Hydraulikkammerbereich in den Überströmbereich bzw. aus dem vorderen Hydraulikkammerbereich in den hinteren Hydraulikkammerbereich genau dann ermöglicht, wenn der Druck im vorderen Hydraulikkammerbereich größer ist als der Druck im Überströmbereich bzw. der Druck im hinteren Hydraulikkammerbereich. Durch eine solche Lösung mit Rückschlagventil ist es möglich, das Wiederausfedern der Dämpfungsvorrichtung, den sogenannten Rückhub, dergestalt zu regulieren, dass der Rückhub schnell erfolgen kann, ohne dass sich im Belastungsfall, also beim Einfedern, durch diesen Rückhubkanal eine Bypassmöglichkeit, also eine Umgehungsmöglichkeit der Hydraulikflüssigkeit aus dem Überströmbereich am Multiplikatorventil vorbei in die vordere Hydraulikkammer ergibt. Alternativ oder zusätzlich zum Rückschlagventil ist es selbstverständlich auch denkbar, dass die Ventilanordnung einen permanenten Bypasskanal aufweist, welcher den hinteren Hydraulikkammerbereich kontinuierlich mit dem vorderen Hydraulikkammerbereich über einen möglichst schmalen Spalt verbindet.

Nach einer weiteren Umsetzung der erfindungsgemäßen Vorrichtung kann die Ventilanordnung ein Drosselrohr aufweisen, welches entlang der Mittenachse angeordnet und derart als Hohlzylinder ausgebildet ist, dass der Überströmbereich in einem Innenvolumen des Hohlzylinders ausgebildet ist. Gleichzeitig weist der Trennkolben vorzugsweise eine Ausnehmung auf, welche entlang der Mittenachse angeordnet und ausgelegt ist, einen dem Drosseldorn abgewandten Endbereich des Drosselrohrs und/oder des Drosseldorns aufzunehmen. Durch die Ausgestaltung der Ventilanordnung mit einem Drosselrohr und einer zugehörigen Ausnehmung kann die Volumenausdehnung der erfindungsgemäßen Vorrichtung weiter optimiert werden. Dabei kann das Drosselrohr und/oder der Drosseldorn durch die erwähnte Ausnehmung des Trennkolbens aufgenommen werden, wodurch Platz innerhalb der Vorrichtung eingespart werden kann, ohne die Funktion der Letzteren zu beeinträchtigen.

Um den Platzbedarf der erfindungsgemäßen Vorrichtung noch weiter zu verringern, kann das Drosselrohr an einem dem Drosseldorn abgewandten Endbereich teleskopartig ausgebildet sein. Im Einzelnen weist das Drosselrohr in diesem Zusammenhang zwei oder mehrere Schaftsegmente auf, welche ineinander hinein verschiebbar sind. Erst wenn der Drosseldorn in Folge eines Stoßes in das Drosselrohr hinein verschoben wird, verschieben sich die einzelnen Schaftsegmente relativ zueinander, um die Länge des Drosselrohres zu erweitern und somit den nötigen Hubweg bereitzustellen.

Des Weiteren kann vorgesehen sein, auch den Trennkolben mit mindestens einem Trennkolben-Dichtungselement auszustatten, welches gleichsam neben seiner dichtenden Eigenschaften beispielsweise mittels Abstreifringen ein Abstreifen von Hydraulikflüssigkeit gewährleistet, wenn der Trennkolben innerhalb des Hohlkolbens verschoben wird. Hierdurch wird das Füllgas innerhalb des Gasraumes in seiner Reinheit möglichst wenig beeinträchtigt, was zu einer besseren Langlebigkeit der erfindungsgemäßen Vorrichtung beiträgt, und es ermöglichen kann, die Wartungsintervalle zu verlängern.

Gemäß einer weiteren Ausführungsform der erfindungsgemäßen Vorrichtung zum Dämpfen von Druckkräften weist die Ventilanordnung einen über mindestens einen Kanal mit dem Überströmbereich verbundenen exzentrischen Hydraulikraum und ferner mindestens ein exzentrisch angeordnetes Multiplikatorventil auf. Dabei steht eine hintere Rückfläche des Multiplikatorventils mit dem exzentrischen Hydraulikraum und eine vordere Rückfläche des Multiplikatorventils mit dem vorderen Hydraulikraumbereich in hydraulischer Rückverbindung derart, dass bei geöffnetem Multiplikatorventil Hydraulikflüssigkeit aus dem exzentrischen Hydraulikraum in den vorderen Hydraulikkammerbereich strömt. Durch das Vorsehen des exzentrischen Hydraulikraums zusätzlich zu dem Überströmbereich ist es somit möglich, ein Multiplikatorventil exzentrisch derart anzuordnen, dass es den Überströmbereich selbst nicht umgeben muss. Hierdurch wird eine beträchtliche Reduzierung des Volumens des Multiplikatorventils erzielt, was zudem seine Konstruktion erheblich vereinfacht. Durch die außermittige Anordnung des Multiplikatorventils in der Ventilanordnung ergibt sich neben der einfachen und kostengünstigen Bauweise der weitere Vorteil, einen Drosseldorn an der Vorrichtung zum Abdämpfen von Druckkräften vorsehen zu können, ohne dass der Einsatz des Multiplikatorventils zu einer voluminösen Bauweise führen würde. Hieraus ergibt sich als Konsequenz, dass durch den sehr geringen benötigten Bauraum die Gesamtlänge der Dämpfungsvorrichtung nicht vergrößert werden muss.

Weiterhin kann vorgesehen sein, dass das Flächenverhältnis zwischen einer vorderen Wirkfläche, also der Ausgangsfläche des Multiplikatorventils, und einer hinteren Wirkfläche, also der Eingangswirkfläche des Multiplikatorventils derart gewählt ist, dass zum Öffnen des Multiplikatorventils in dem exzentrischen Ringraum der Druck ein vielfaches des Druckes betragen muss, welcher im vorderen Hydraulikkammerbereich herrscht. Hierbei ist es insbesondere von Vorteil, diesen Multiplikationsfaktor des Multiplikatorventils in einem Bereich zwischen zwei und acht, beispielsweise auf fünf festzulegen, was bedeutet, dass im exzentrischen Ringraum jeweils ein Wert des Druckes, der im vorderen Hydraulikkammbereich vorliegt, multipliziert mit diesem Multiplikationsfaktor herrschen muss, um das Multiplikationsventil aus seinem Ventilsitz in seine Öffnungsposition zu verschieben. Im gewählten Beispiel, d.h. wenn der Multiplikationsfaktor auf fünf festgelegt ist, muss also im exzentrischen Ringraum mindestens das Fünffache des Druckes herrschen, der im vorderen Hydraulikkammbereich vorliegt um das Multiplikatorventil zu öffnen. Hierdurch kann der Fülldruck des Gasraumes erheblich niedriger bemessen werden, als wenn kein Multiplikatorventil vorgesehen wäre.

Es ist ferner besonders von Vorteil, wenn das Überlastventil derart ausgebildet ist, dass die zum Öffnen des Überlastventils erforderliche Schaltkraft wesentlich höher als die zum Öffnen des Multiplikatorventils erforderliche Schaltkraft ist. Wie bereits angedeutet, ist auch das Multiplikatorventil Teil der Dämpfungselemente, welche für Stöße im normalen Fahr- und Rangierbetrieb verwendet werden. Demnach sollte das Multiplikatorventil derart ausgebildet sein, dass dieses bereits bei wesentlich geringeren Stoßkräften öffnet, als es bei dem Überlastventil der Fall ist. Das Multiplikatorventil stellt eine kostengünstige und einfache Möglichkeit dar, die erforderliche Schaltkraft besonders genau auf den speziellen Anwendungsfall festlegen zu können.

An dieser Stelle sei darauf hingewiesen, dass das Überlastventil selbstverständlich auch ohne ein Multiplikatorventil verwendet werden kann.

Wie bereits angedeutet, ist es bevorzugt, die erfindungsgemäße Vorrichtung zum Abdämpfen von Druckkräften als regeneratives Energieverzehrelement in einem spurgeführten Fahrzeug, insbesondere einem Schienenfahrzeug zu verwenden. Dementsprechend betrifft die Erfindung ferner ein spurgeführtes Fahrzeug, insbesondere Schienenfahrzeug, mit einer erfindungsgemäßen Vorrichtung zum Abdämpfen von Druckkräften. Es versteht sich von selbst, dass die erfindungsgemäße Vorrichtung alternativ auch für anderweitige Anwendungsbereiche, wie beispielsweise im Automobilbau, eingesetzt werden kann.

Im Folgenden wird die erfindungsgemäße Vorrichtung zum Abdämpfen von Druckkräften anhand der in den Figuren dargestellten Ausführungsformen näher erläutert.

Dabei zeigen:
- Fig. 1: eine Schnittdarstellung durch eine erste Ausführungsform der erfindungsgemäßen Vorrichtung zum Abdämpfen von Druckkräften;
- Fig. 2: eine vergrößerte Detaildarstellung der Vorrichtung gemäß Fig. 1;
- Fig. 3: eine Schnittdarstellung eines Ventilkörpers mit Rückschlagventil;
- Fig. 4: eine Schnittdarstellung einer zweiten Ausführungsform der erfindungsgemäßen Vorrichtung zum Abdämpfen von Druckkräften;

- Fig. 5: eine vergrößerte Darstellung der in Fig. 4 gezeigten Ventilanordnung mit zugehörigem Drosseldorn;
- Fig. 6: eine detaillierte Schnittdarstellung einer dritten Ausführungsform der erfindungsgemäßen Vorrichtung zum Abdämpfen von Druckkräften im ersten Zustand des Drosseldorns;
- Fig. 7: eine detaillierte Schnittdarstellung der dritten Ausführungsform der erfindungsgemäßen Vorrichtung im zweiten Zustand des Drosseldorns;
- Fig. 8: eine detaillierte Schnittdarstellung einer vierten Ausführungsform der erfindungsgemäßen Vorrichtung mit teleskopartigem Drosselrohr; und
- Fig. 9: eine Schnittdarstellung einer Ventilanordnung gemäß einer weiteren Ausführungsform der Erfindung.

Nachfolgend werden gleiche oder gleich wirkende Bauteile aus Gründen der Übersichtlichkeit mit gleichen Bezugszeichen versehen.

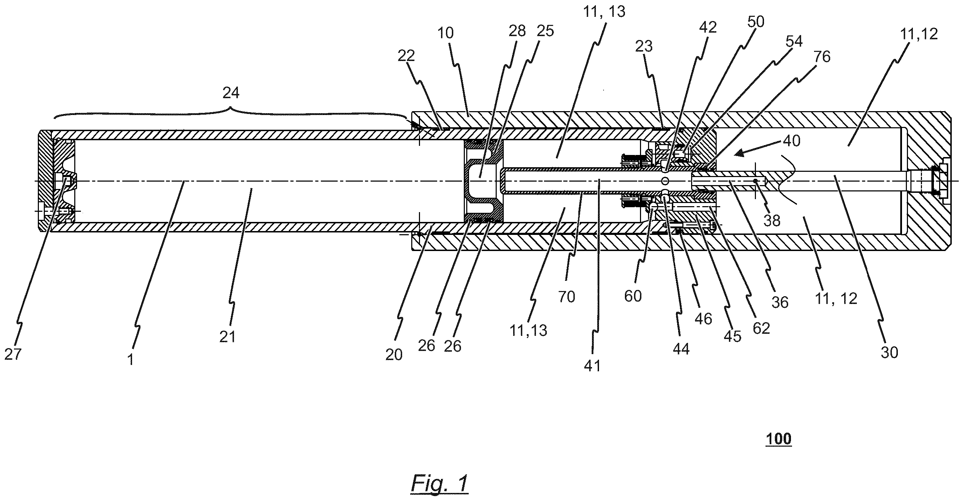

Fig. 1 ist eine Schnittansicht eines ersten Ausführungsbeispiels einer erfindungsgemäßen Vorrichtung zum Abdämpfen von Druckkräften, welche im Wesentlichen aus einem Zylinder 10 und einem darin teleskopartigen entlang einer Mittenachse 1 verschiebbar angeordneten Hohlkolben 20 besteht. In einem Endbereich des Hohlkolbens 20 ist eine Ventilanordnung 40 angeordnet, welche eine innerhalb des Zylinders 10 ausgebildete Hydraulikkammer 11 in einem hinteren Hydraulikkammerbereich 12 und einem vorderen Hydraulikkammerbereich 13 unterteilt. Somit erstreckt sich die Hydraulikkammer 11 zumindest teilweise in den Hohlkolben 20 hinein. Mit anderen Worten, der vordere Hydraulikkammerbereich 13 ist innerhalb des Hohlkolbens 20 ausgebildet.

Ein Trennkolben 25 trennt den vorderen Hydraulikkammerbereich 13 von einem innerhalb des Hohlkolbens 20 ausgebildeten Gasraum 21, wobei der Gasraum 21 über ein Füllventil 27 mit unter Druck stehendem Füllgas befüllt werden kann. Der Trennkolben 25 weist Trennkolbendichtungselemente 26 auf und ist entlang der Mittenachse 1 beweglich angeordnet. Eine Volumenzunahme im vorderen Hydraulikkammerbereich 13, beispielsweise durch Einströmen von Hydraulikflüssigkeit aus dem hinteren Hydraulikkammerbereich 12 in den vorderen Hydraulikkammerbereich 13, bewirkt somit ein Verschieben des Trennkolbens 25 in den Gasraum 21 hinein, wobei das Füllgas im Gasraum gleichzeitig komprimiert wird.

Bei einem Verschieben des Hohlkolbens 20 des Zylinders 10 verhindern erste Hohlkolbendichtungselemente 22 und zweite Hohlkolbendichtungselemente 23 ein Austreten von Hydraulikflüssigkeit aus der Hydraulikkammer 11 an dem Spalt zwischen Zylinder 10 und Hohlkolben 20 vorbei in den die Vorrichtung 100 umgebenden Außenbereich. Insbesondere wird beispielsweise durch nicht dargestellte Abstreifringe am ersten Hohlkolbendichtungselement 22 und/oder am zweiten Hohlkolbendichtungselement 23 gewährleistet, dass im Wesentlichen keine Hydraulikflüssigkeit die Oberfläche des momentan nicht in den Zylinder eingeschobenen Außenbereichs 24 des Hohlkolbens benetzt.

Ein Drosseldorn 30 ist im hinteren Hydraulikkammerbereich 12 der Hydraulikkammer 11 ausgebildet und in der Mittenachse 1 des Zylinders 10 befestigt. In dem in Fig. 1 dargestellten Zustand der Vorrichtung 100 ragt der Drosseldorn 30 teilweise in einen Überströmbereich 41 der Ventilanordnung 40 hinein. Der Überströmbereich 41 wird gemäß dieser Ausführungsform insbesondere durch den Hohlraum 72 eines Drosselrohrs 70 ausgebildet. An einem dem hinteren Hydraulikkammerbereich 12 zugewandten Endbereich des Drosselrohrs 70 ist mindestens ein Dichtungselement angebracht, welches ein Eindringen von Hydraulikflüssigkeit in den Überströmbereich 41 zwischen der Außenoberfläche des Drosseldorns und der Innenfläche des Drosselrohres verhindert.

Der in den Zeichnungen gezeigte Drosseldorn 30 ist insbesondere ausgebildet, die Strömungsgeschwindigkeit von Hydraulikflüssigkeit vom hinteren Hydraulikkammerbereich 12 in Richtung des Überströmbereichs 41 zu kontrollieren. Gemäß den dargestellten Ausführungsformen weist der Drosseldorn 30 hierzu einen Hohlraum 36 zur Aufnahme von Hydraulikflüssigkeit im Inneren des Drosseldorns 30 sowie mindestens eine erste Radialbohrung 38 auf. Die mindestens eine Radialbohrung 38 ist vorzugsweise an einem proximalen, d.h. vom Überströmbereich 41 abgewandten Ende des Hohlraumes angebracht, wobei die mindestens eine erste Radialbohrung 38 ausgelegt ist, ein Überströmen von Hydraulikflüssigkeit von dem hinteren Hydraulikkammerbereich 12 in den Hohlraum 36 und somit in den Überströmbereich 41 zu ermöglichen. Hydraulikflüssigkeit, welche aus dem hinteren Hydraulikkammerbereich 12 in den Hohlraum 38 und somit in den Überströmbereich 41 strömt, wird durch einen Druckabfall an der mindestens einen ersten Radialbohrung 38 während des Überströmens gedrosselt. Das Gehäuse 45 der Ventilanordnung 40 ist lösbar mit dem Endbereich des Hohlkolbens 20 verbunden. Bei einem Kompressionsvorgang der erfindungsgemäßen Vorrichtung 100 wird der Hohlkolben 20 durch Einwirken von äußeren Kräften entlang der die Längsrichtung darstellenden Mittenachse 1 in den Zylinder 10 hinein verschoben. Demgemäß bewegt sich auch die am Hohlkolben befestigte Ventilanordnung 40 weiter in den Zylinder 10, also in den hinteren Hydraulikkammerbereich 12 hinein. Hierdurch entsteht ein Überdruck im hinteren Hydraulikkammerbereich 12 und bei geringen Betätigungsgeschwindigkeiten, also bei quasistatischem Einfedern, stellt sich der gleiche Überdruck im Überströmbereich 41 der Ventilanordnung ein. Über mindestens einen Kanal 42 dieses Überströmbereichs ist ein exzentrisch angeordneter Hydraulikraum 43 mit dem Überströmraum 41 der Ventilanordnung 40 verbunden, so dass auch in diesem exzentrischen Hydraulikraum 43 beim quasistatischen Fall der gleiche Überdruck wie im hinteren Hydraulikkammerbereich 12 der Hydraulikkammer 11 vorliegt. Der exzentrische Hydraulikraum 43 wird mittels eines Multiplikatorventils 50 mit dessen Eingangsseite verschlossen. Auf Ausgangsseite des Multiplikatorventils 50 wirkt der Druck der im vorderen Hydraulikkammerbereich 13 der Hydraulikkammer 11 herrscht.

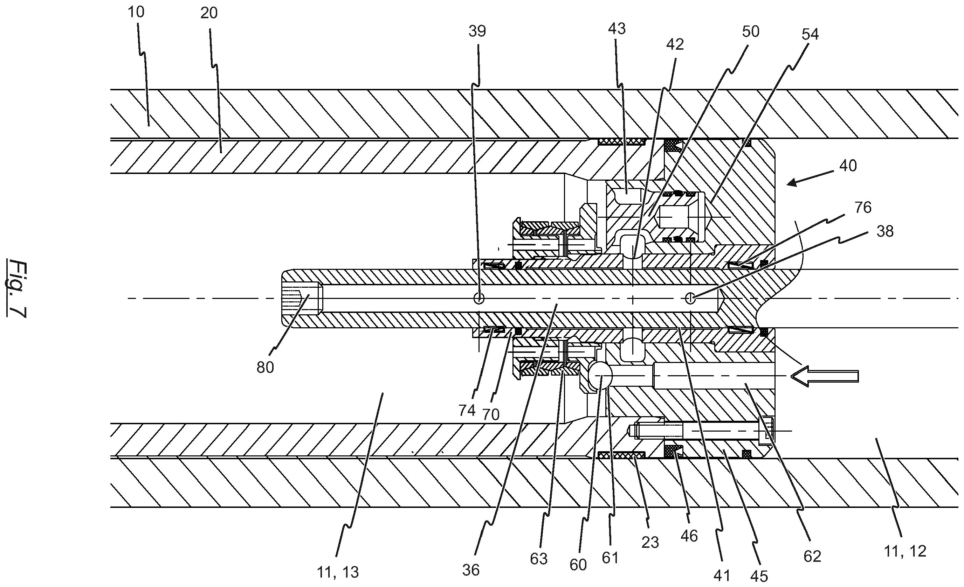

Bei genügend großem Druck, d.h. bei einem entsprechend ausreichenden Druckverhältnis zwischen dem Druck im exzentrischen Hydraulikraum 43 und dem Druck im vorderen Hydraulikkammerbereich 13, öffnet das Multiplikatorventil und erlaubt ein Überströmen von Hydraulikflüssigkeit aus dem Überströmbereich 40 durch den Kanal 42 und den exzentrischen Hydraulikraum 43 in den vorderen Hydraulikkammerbereich 13. Durch dieses Überströmen der Hydraulikflüssigkeit vom hinteren Hydraulikkammerbereich 12 in den vorderen Hydraulikkammerbereich 13 verschiebt sich der Hohlkolben 20 mit der Ventilanordnung 40 in den Zylinder 10 hinein. Demzufolge wird auch der Drosseldorn 30 sukzessive weiter in das Drosselrohr 70 hinein verschoben. Dies geschieht solange, bis die mindestens eine erste Radialbohrung 38 durch das mindestens eine Dichtungselement 76 des Drosselrohrs 70 gegenüber dem hinteren Hydraulikkammerbereich 12 abgedichtet wird (vgl. Fig. 7).

Mit anderen Worten, der Drosseldorn 30 wird von einem ersten Zustand (Figuren 1 bis 6), in welchem Hydraulikflüssigkeit vom hinteren Hydraulikkammerbereich 12 in den Überströmbereich 41 strömen kann, in einen zweiten Zustand (Fig. 7), in welchem der hintere Hydraulikkammerbereich 12 fluiddicht vom Überströmbereich 41 getrennt ist, überführt, während der Hohlkolben 20 in den Zylinder 10 hinein verschoben wird. In dem in der Fig. 7 dargestellten zweiten Zustand des Drosseldorns 30 kann also keine Hydraulikflüssigkeit über die mindestens eine erste Radialbohrung 38 mehr in den Überströmbereich 41 strömen, da die mindestens eine erste Radialbohrung 38 hinter dem mindestens einen Dichtungselement 76 zum Liegen kommt.

Im normalen Fahr- und Rangierbetrieb treten für gewöhnlich keine Stoßkräfte auf, welche in der Lage wären, den Hohlkolben 20 derart weit in den Zylinder 10 hinein zu verschieben, dass der Drosseldorn 30 von seinem ersten in den zweiten Zustand überführt wird. Dementsprechend wird der Drosseldorn 30 im normalen Fahrbetrieb maximal soweit in das Drosselrohr 70 hinein verschoben, dass die mindestens eine erste Radialbohrung 38 gerade das Dichtungselement 76 passiert.

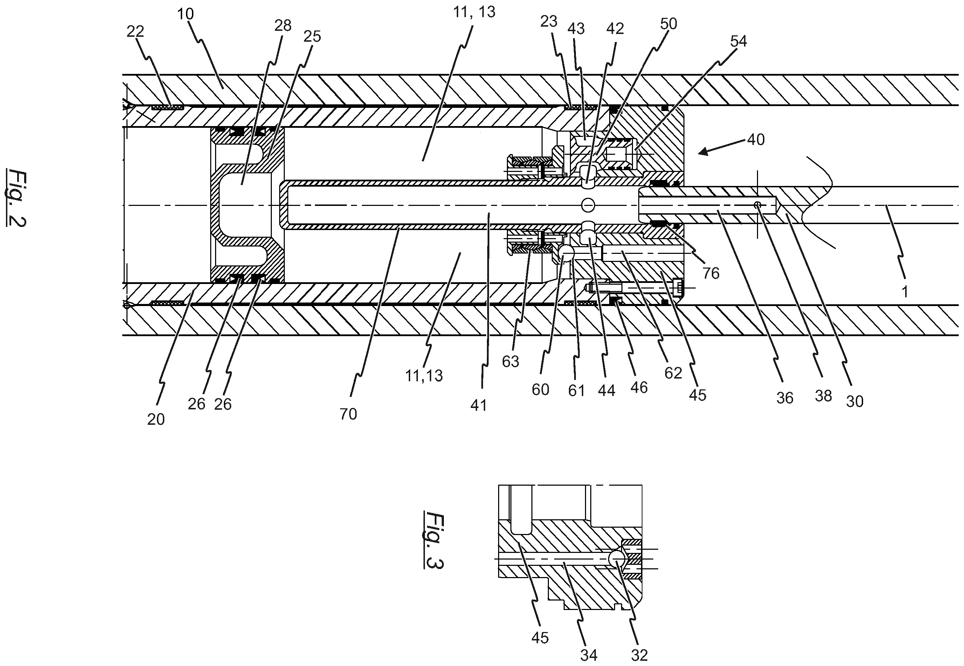

Fig. 3 zeigt einen Halbschnitt durch die in Fig. 2 dargestellte Ventilanordnung 40, welche ferner ein Rückschlagventil 32, insbesondere ein Kugelventil aufweist, wobei das Rückschlagventil 32 derart angeordnet ist, dass es ein Rückströmen der Hydraulikflüssigkeit aus dem vorderen Hydraulikkammerbereich 13 in den Überströmbereich 41 (nicht dargestellt) und/oder in den hinteren Hydraulikkammerbereich 12 genau dann ermöglicht, wenn der Druck im vorderen Hydraulikkammerbereich größer ist, als mindestens einer der Drücke im Überströmbereich 41 oder im hinteren Hydraulikkammerbereich 12. Dies ist insbesondere dann der Fall, wenn die zu dämpfende Druckkraft nicht mehr am Hohlkolben 20 anliegt, wodurch im hinteren Hydraulikkammerbereich 12 lediglich der Ausgangsdruck herrscht, während im vorderen Hydraulikkammerbereich 13 der oben beschriebene Überdruck besteht. In diesem Fall öffnet das Rückschlagventil 32 und ermöglicht somit ein Rückfluss der Hydraulikflüssigkeit vom vorderen Hydraulikkammerbereich 13 über den Rückflusskanal 34 in den hinteren Hydraulikkammerbereich 12, solange bis das Druckgleichgewicht zwischen dem vorderen und dem hinteren Hydraulikkammerbereich 12, 13 wieder hergestellt ist. Auf diese Weise ist die erfindungsgemäße Vorrichtung zum Abdämpfen von Druckkräften komplett reversibel ausgestaltet und muss somit selbst im Crashfall (siehe unten) nicht ausgetauscht werden.

Wie es den dargestellten Ausführungsformen der erfindungsgemäßen Vorrichtung entnommen werden kann, weist die Ventilanordnung 40 ferner ein Überlastventil 60 auf, welches über mindestens einen Überlastkanal 62 in Verbindung mit dem hinteren Hydraulikkammerbereich steht. Im geöffneten Zustand des Überlastventils 60 ermöglicht ein Überlast-Durchlassspalt 61 (Fig. 2) ein Überströmen von Hydraulikflüssigkeit aus dem hinteren Hydraulikkammerbereich 12 in den vorderen Hydraulikkammerbereich 13. Das Überlastventil ist ausgebildet, dass dieses nur dann in den geöffneten Zustand überführbar ist, solange der Drosseldorn 30 in seinem zweiten Zustand ist. Mit anderen Worten, die zum Öffnen des Überlastventils 60 erforderliche Schaltkraft ist wesentlich höher als die im normalen Fahrbetrieb auftretenden Stoßkräfte.

Sobald der erste, für den normalen Fahrbetrieb ausgelegte Hub der Dämpfungsvorrichtung 100 aufgebraucht ist, befindet sich der Drosseldorn 30 in seinem zweiten Zustand, in welchem zunächst keine weitere Hydraulikflüssigkeit von dem hinteren Hydraulikkammerbereich 12 in den vorderen Hydraulikkammerbereich 13 übertreten kann (Fig. 7). In diesem sogenannten Überlastfall entsteht ein Druckunterschied zwischen dem hinteren und dem vorderen Hydraulikkammerbereich 12, 13, welcher derart hoch ist, dass das Überlastventil 60 öffnet und über einen Überlast-Durchlassspalt 61 ein Überströmen von Hydraulikflüssigkeit aus dem hinteren Hydraulikkammerbereich 12 in den vorderen Hydraulikkammerbereich 13 ermöglicht. Der hierdurch verursachte Druckabfall über den Überlast-Durchlassspalt 61 dient folglich dazu, unplanmäßig hohe Stoßenergien sicher und reversibel abzudämpfen. Wie bereits erwähnt, kann auch nach dem Ansprechen des Überlastventils 60 ein Rückfluss von Hydraulikflüssigkeit vom vorderen Hydraulikkammerbereich 13 in den hinteren Hydraulikkammerbereich 12 über das Rückschlagventil 32 erfolgen.

Es ist allen dargestellten Ausführungsformen gemeinsam, dass der Drosseldorn einen Hohlraum 36 zur Aufnahme von Hydraulikflüssigkeit im Inneren des Drosseldorns 30 sowie mindestens eine erste Radialbohrung 38 an einem proximalen Ende des Hohlraums 36 aufweist. Der Hohlraum ist vorzugsweise als Axialbohrung im Drosseldorn 30 ausgebildet. Die mindestens eine erste Radialbohrung 38 ist ausgelegt, im ersten Zustand des Drosseldorns 30 ein Überströmen von Hydraulikflüssigkeit von dem hinteren Hydraulikkammerbereich 12 in den Hohlraum 36 zu ermöglichen.

Gemäß den in den Figuren 1, 2 und 8 dargestellten Ausführungsformen ist dieser Hohlraum 36 in Richtung des Drosselrohres 70 geöffnet und steht somit in Fluidverbindung mit demselbigen.

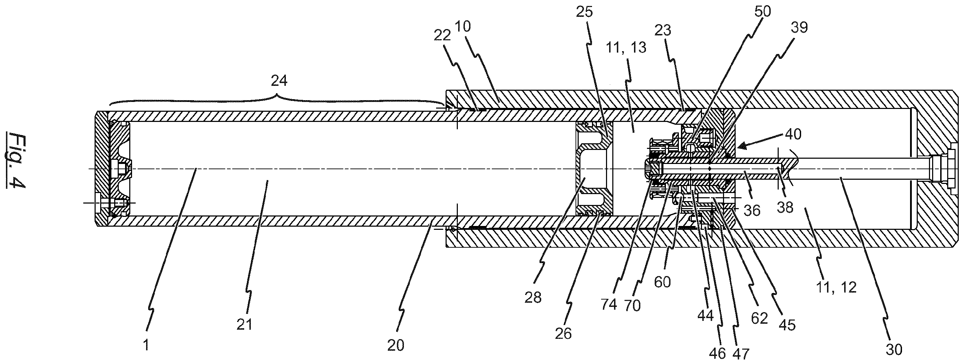

Im Hinblick auf die in den Figuren 4 bis 7 dargestellten Ausführungsformen der Vorrichtung 100 kann der Hohlraum 36 des Drosseldorns 30 alternativ an einem distalen Ende, d.h. an einem dem vorderen Hydraulikkammerbereich 13 zugewandten Ende, ein lösbares Verschlusselement 80 aufweisen, welches ausgelegt ist, den Hohlraum 36 des Drosseldorns 30 gegenüber dem Überströmbereich 41 der Ventilanordnung 40 verschließbar auszugestalten. Gemäß dieser Ausführungsform handelt es sich bei dem Hohlraum 36 des Drosseldorns 30 also um eine Fluidkammer, in welche die Hydraulikflüssigkeit aus dem ersten Hydraulikkammerbereich 12 über die mindestens eine erste Radialbohrung 38 hinein strömen kann. Da der poximale Endbereich des Hohlraums 36 nicht mehr mit dem Überströmbereich 41 direkt in Verbindung steht, wird die Hydraulikflüssigkeit anderweitig aus dem Hohlraum 36 zum Überströmbereich 41 weitergeleitet.

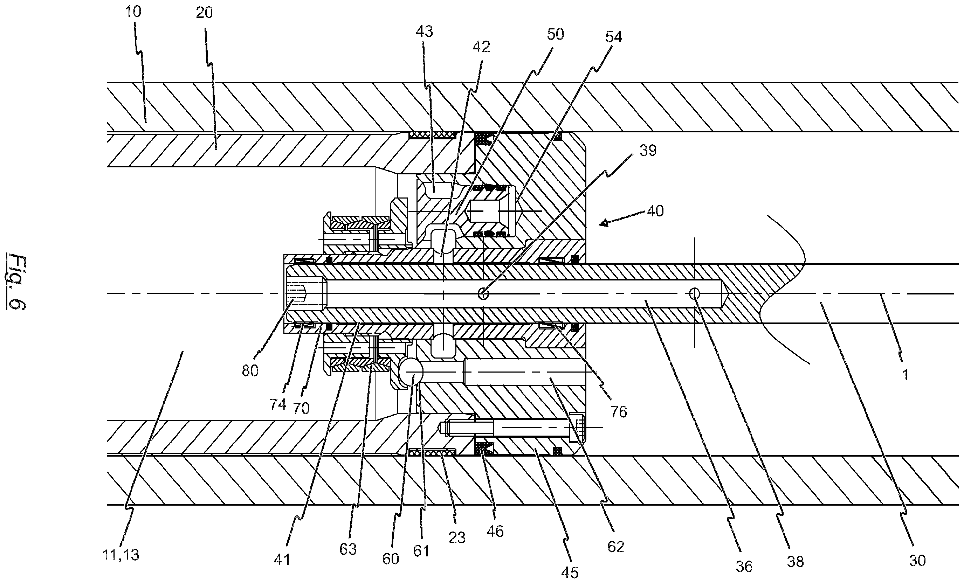

Wie es insbesondere der Fig. 6 zu entnehmen ist, kann der Drosseldorn 30 dazu ferner mindestens eine zweite Radialbohrung 39 aufweisen, welche zwischen dem distalen und dem proximalen Ende des Hohlraums angeordnet ist. Die mindestens eine zweite Radialbohrung 39 ist ausgelegt, im ersten Zustand des Drosseldorns 30 ein Überströmen von Hydraulikflüssigkeit von dem Hohlraum 36 in den Überströmbereich 41 zu ermöglichen. Selbstverständlich ist es auch durch beliebige andere Mittel möglich, die Fluidkammer des Hohlraumes 36 mit dem Überströmbereich 41 fluidisch zu verbinden. Die mindestens eine zweite Radialbohrung 39 hat den zusätzlichen Vorteil, dass ein weiterer Druckabfall zur Dämpfung der Druckkraft entsteht.

Im Zusammenhang mit dem Verschlusselement 80 sei ferner erwähnt, dass es gemäß dieser in den Figuren 4 bis 7 dargestellten Ausführungsform ausreichend ist, das Drosselrohr 70 als beidseitig geöffneten Hohlzylinder auszugestalten. In diesem Zusammenhang weist das Drosselrohr 70 zusätzlich mindestens ein zweites Dichtungselement 74 auf, welches die äußere Oberfläche des Drosseldorns 30 fluiddicht mit der Innenseite des Drosselrohrs 70 verbindet. Somit kann auch ohne das Vorsehen eines halbseitig geschlossenen Drosselrohres eine fluiddichte Ventilanordnung 40 hergestellt werden, wodurch der Platzbedarf derselbigen wesentlich verringert werden kann.

Zurückkommend auf die mindestens eine zweite Radialbohrung 39 ist zu erwähnen, dass diese genau im Abstand des ersten, für die im normalen Fahrbetrieb bzw. Rangierbetrieb auftretenden Stoßkräfte vorgesehenen Hubes von der mindestens einen ersten Radialbohrung 38 beabstandet ist. Insbesondere handelt es sich dabei vorzugsweise um einen Abstand von etwa 60 mm. Genau dieser Abstand ermöglicht es, dass die mindestens eine zweite Radialbohrung 39 zumindest solange mit dem Überströmbereich 41 in Fluidkontakt steht, solange die mindestens eine erste Radialbohrung 38 in Fluidkontakt mit dem hinteren Hydraulikkammerbereich 12 steht, d.h. solange der Drosseldorn in seinem ersten Zustand ist. Sobald der Drosseldorn 30 in seinen zweiten Zustand überführt ist, d.h. die mindestens eine erste Radialbohrung 38 steht nicht mehr im Kontakt mit dem hinteren Hydraulikkammerbereich 12, kann keine Hydraulikflüssigkeit über den Hohlraum 36 des Drosseldorns 30 in dem vorderen Hydraulikkammerbereich 13 überströmen.

Erst sobald die Stoßkraft groß genug ist, um dass Überlastventil 60 zu öffnen, kann weitere Hydraulikflüssigkeit vom hinteren Hydraulikkammerbereich 12 in den vorderen Hydraulikkammerbereich 13 strömen. Über einen Überlast-Durchlassspalt 61 ist die Auslösefläche des Überlastventils 60 mit dem hinteren Hydraulikkammerbereich 12 verbunden, d.h. im Überlastkanal 62 entsteht derselbe Druck wie im hinteren Hydraulikkammerbereich 12. Der Überlastkanal 62 kann durch eine Bohrung gebildet werden: Gleichwohl ist es bevorzugt, eine Vielzahl von Überlastkanälen 62 vorzusehen, um einen möglichst großen effektiven Strömungsquerschnitt im Überlastfall erzielen zu können.

Die Vorspannung des Überlastventils 60 wird vorzugsweise mittels einer Feder resultiert, welche ein Kugelventil in seinen Ventilsitz presst. Die Feder 63 ist insbesondere als Ringfeder ausgebildet und weist eine hohe Vorspannkraft, beispielsweise 20 kN, auf. Aufgrund der Querschnittsverhältnisse führt eine derartige Federvorspannung von beispielsweise 20 kN zu einer höheren Auslösekraft des Überlastventils, beispielsweise 800 kN. Hierdurch kann die Ventilfläche, auf welcher der Druck des mindestens einen Überlastkanals 62 öffnen wird, relativ groß sein. Dadurch ist ein in geöffneter Position des Überlastventils ein großer Volumenstrom möglich, wodurch im Crashfall in kürzester Zeit große Druckkräfte abgedämpft werden können. Es bedarf keiner weiteren Erläuterungen, dass die zum Öffnen des Überlastventils erforderliche Schaltkraft vorab, beispielsweise durch die Bestimmung der Federkraft der Feder 63, festlegbar ist.

Wie bereits angedeutet, weist die Ventilanordnung gemäß aller dargestellten Ausführungsformen ein Drosselrohr 70 auf, welches entlang der Mittenachse 1 angeordnet und derart als Hohlzylinder ausgebildet ist, dass der Überströmbereich 41 in einem Innenvolumen des Hohlzylinders ausgebildet ist. Dabei sind in den Zeichnungen grundlegend zwei unterschiedliche Ausführungsformen des Drosselrohrs 70 zu entnehmen. So ist den Ausführungsformen gemäß Figuren 1, 2 und 8 jeweils ein Drosselrohr 70 zu entnehmen, welches als Hohlzylinder ausgebildet ist und an einem dem Trennkolben 25 zugewandten Endbereich geschlossen ist. Dagegen ist das in den Figuren 4 bis 7 dargestellte Drosselrohr 70 als Hohlzylinder ausgebildet, welcher zu beiden Seiten geöffnet ist.

Um den Platzbedarf der erfindungsgemäßen Vorrichtung 100 noch weiter zu verringern, kann der Trennkolben 25 eine Ausnehmung 28 aufweisen, welche entlang der Mittenachse 1 angeordnet und ausgelegt ist, einen den Trennkolben zugewandten Endbereich des Drosselrohres 70 und/oder des Drosseldorns 30 aufzunehmen. Durch die im Querschnitt im Wesentlichen U-förmige Ausnehmung des Trennkolbens 25 wird das Volumen des vorderen Hydraulikkammerbereichs 13 auf einfache Weise vergrößert ohne die Gesamtausmaße der Vorrichtung 100 vergrößern zu müssen und ohne Einbußen in der Dichtigkeit zwischen dem Gasraum 21 und dem vorderen Hydraulikkammerbereich 13 hinnehmen zu müssen.

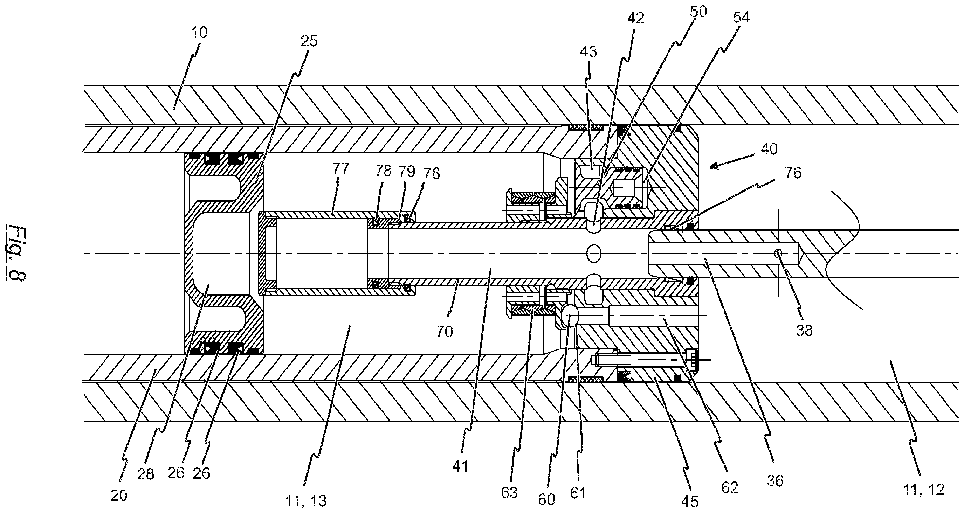

In Fig. 8 ist eine weitere Ausführungsform der erfindungsgemäßen Vorrichtung zum Abdämpfen von Druckkräften dargestellt, welche den Platzbedarf noch weiter verringert. In diesem Zusammenhang sei auf das dargestellte Drosselrohr 70 hingewiesen, welches an einem den Trennkolben 25 zugewandten Endbereich teleskopartig ausgebildet ist. Zu diesem Zweck kann das Drosselrohr 70 aus zwei oder mehreren Schaftsegmenten 77-1, 77-2 bestehen, welche über Dichtungsringe 78 miteinander verbunden sind. Die einzelnen Schaftsegmente 77-1, 77-2 sind in Längsrichtung der Vorrichtung 100 gegeneinander verschiebbar, so dass das Drosselrohr 70 im Dämpfungsfall verlängert werden kann, um die gesamte Länge des Drosseldorns 30 aufnehmen zu können. Die Verlängerung des teleskopartig ausgebildeten Drosselrohres 70 ist jedoch durch den Anschlag 79 begrenzt, welcher auf einen dem Trennkolben 25 zugewandten Endbereich des ersten Schaftsegments 77-1 aufschraubbar ist.

Schließlich sei weiterhin erwähnt, dass die Ventilanordnung 40 gemäß aller dargestellten Ausführungsformen einen über mindestens einen Kanal 42 mit dem Überströmbereich 41 verbundenen exzentrischen Hydraulikraum 43 und ferner mindestens ein exzentrisch angeordnetes Multiplikatorventil 50 aufweist.

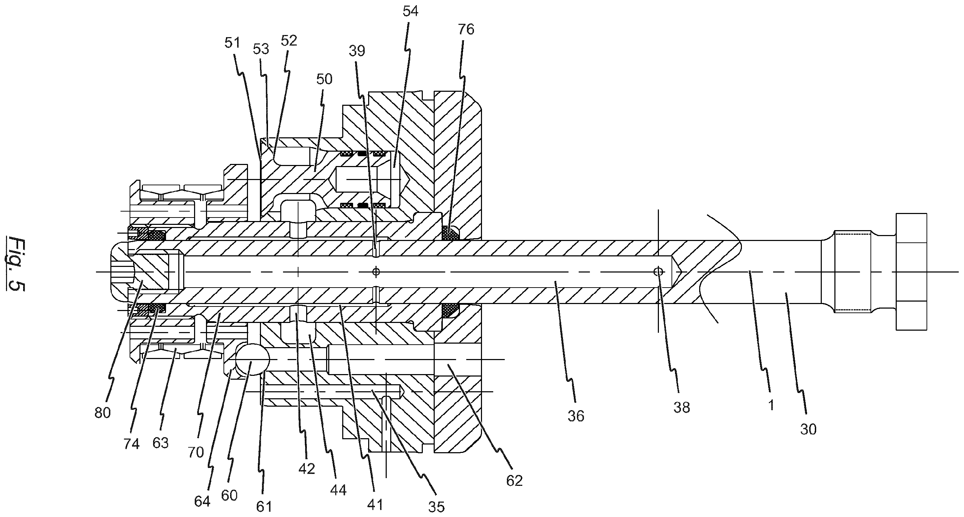

Eine detaillierte Ansicht des Multiplikatorventils kann beispielsweise der Fig. 5 entnommen werden. Daraus ergibt sich, dass die hintere Wirkfläche 52 des Multiplikatorventils 50 mit dem exzentrischen Hydraulikraum 43 und die vordere Wirkfläche 51 des Multiplikatorventils 50 mit dem vorderen Hydraulikkammerbereich 13 in hydraulischer Wirkverbindung stehen, so dass bei dem geöffneten Multiplikatorventil 50 Hydraulikflüssigkeit aus dem exzentrischen Hydraulikraum 43 in den vorderen Hydraulikkammerbereich 13 strömt. Bei Stößen, welche während des Normalbetriebs auftreten, strömt Hydraulikflüssigkeit vom hinteren Hydraulikkammerbereich 12 über den Drosseldorn 30 in den Überströmbereich 41 und von dort über den Kanal 42 in den exzentrischen Hydraulikraum 43. Bei diesem Einströmen von Hydraulikflüssigkeit über den Kanal 42 in den exzentrischen Hydraulikraum 43 wirkt der Druck im exzentrischen Hydraulikraum 43 auf die hintere Wirkfläche 52, d.h. die Eingangsfläche des Multiplikatorventils. Ist dieser auf die hintere Wirkfläche 52 wirkende Druck größer als der auf die vordere Wirkfläche 51 des Multiplikatorventils wirkende Druck multipliziert mit dem auslegungsgemäßen Multiplikationsfaktor des Multiplikatorventils, so wird das Multiplikatorventil 50 aus seinem Sitz gedrückt und gibt den Durchlassspalt 53 frei. Mit anderen Worten, der Druckabfall über dem Durchlassspalt 53 trägt ebenfalls zur Abdämpfung der Stoßenergie im Normalbetrieb der Vorrichtung 100 bei. Somit wird beim Öffnen des Multiplikatorventils der Durchlassspalt 53 zumindest teilweise freigegeben, was zu einem weiteren Druckabfall über diesen Durchlassspalt zusätzlich zu dem Druckabfall an der mindestens einen ersten bzw. zweiten Radialbohrung 38, 39 führt. Ein rückstellendes Multiplikatorventil wird unter anderem dadurch gewährleistet, dass in der hinteren Ventilkammer 54 des Multiplikatorventils ein relativ niedriger Druck, nämlich der Druck, der dem Umgebungsdruck während der Montage entspricht, herrscht.

Es sei ferner erwähnt, dass in den Ausführungsformen gemäß Figuren 4 und 5 ein Kompensationskanal 35 dargestellt ist, welcher kein Rückschlagventil aufweist. Der Kompensationskanal 35 verbindet den vorderen Hydraulikkammerbereich 13 der Hydraulikkammer 11 mit einem Ringraum, welcher zwischen dem in dem Gehäuse 45 der Ventilanordnung ausgebildeten Ventilanordnungs-Dichtungselement 46 und einem ebenfalls in dem Gehäuse 45 der Ventilanordnung angeordneten Kolbenring 47 ausgebildet wird. Das Ventilanordnungs-Dichtungselement 46 und der Kolbenring 47 sind in Fig. 4 gezeigt. In Fig. 5 hingegen sind nur entsprechende Aufnahmen (Nuten) zur Aufnahme des Ventilanordnungs-Dichtungselements 46 bzw. des Kolbenrings 47 dargestellt. Die Kompensationskammer 35 verbindet den zwischen dem Ventilanordnungs-Dichtungselement 46 und dem Kolbenring 47 gebildeten Ringraum mit dem vorderen Hydraulikkammerbereich 13 der Hydraulikkammer 11 derart, dass das Ventilanordnungs-Dichtungselement 46 nur dem Gasfederdruck ausgesetzt ist. Auf diese Weise kann das Ventilanordnungs-Dichtungselement 46 wirksam vor Druckspitzen geschützt werden, insbesondere wenn die Dämpfungsvorrichtung dynamischen Belastungen ausgesetzt wird. Das Vorsehen eines derartigen Kompensationskanals 35 ist aus der Hydraulik allgemein bekannt und wird auch in anderen herkömmlichen gashydraulischen Dämpfern angewandet.

Zur Verdeutlichung der Erfindung wird im Folgenden anhand der Figuren 6 und 7 die Funktionsweise der erfindungsgemäßen Vorrichtung 100 beispielhaft beschrieben:

In Fig. 6 ist die Vorrichtung 100 in ihrer Ausgangslage, d.h. vor einem Stoß, dargestellt. Im Falle eines leichten, d.h. im normalen Fahrbetrieb oder Rangierbetrieb auftretenden Stoßes wird der Hohlkolben 20 in den Zylinder 10 hineingeschoben, wodurch sich der Druck der Hydraulikflüssigkeit im hinteren Hydraulikkammerbereich 12 erhöht. Aufgrund dieses Druckanstieges strömt die Hydraulikflüssigkeit über die mindestens einer erste Radialbohrung 38 in den Hohlraum 36 des Drosseldorns 30 hinein, wodurch bereits eine erste Dämpfung des Stoßes durch den Druckabfall erfolgt.

In der speziellen Ausführungsform der Figuren 6 und 7 strömt die Hydraulikflüssigkeit ferner durch die mindestens eine zweite Radialbohrung 39 aus dem Hohlraum 36 in den Überströmbereich 41 über. Auch hier resultiert eine Abdämpfung der Stoßenergie durch den Druckabfall an der mindestens einen zweiten Radialbohrung 39. Die im Überströmbereich 41 befindliche Hydraulikflüssigkeit tritt mit einem Überdruck in den exzentrischen Hydraulikraum 43 ein und wirkt somit auf die hintere Wirkfläche 52 des Multiplikatorventils 50. Ist der auf die hintere Wirkfläche 52 wirkende Druck größer als der auf die vordere Wirkfläche 51 des Multiplikatorventils 50 wirkende Druck multipliziert mit dem auslegungsgemäßen Multiplikationsfaktor des Multiplikatorventils 50, so wird das Multiplikatorventil 50 aus seinem Sitz gedrückt und gibt den Durchlassspalt 53 frei. Somit kann die Hydraulikflüssigkeit von dem exzentrischen Hydraulikraum 43 in den vorderen Hydraulikkammerbereich 13 überströmen, wodurch letztendlich eine Verbindung zwischen dem hinteren Hydraulikkammerbereich 12 und dem vorderen Hydraulikkammerbereich 13 entsteht.

Durch die Verlagerung der Hydraulikflüssigkeit vom hinteren Hydraulikkammerbereich 12 in den vorderen Hydraulikkammerbereich 13 wird eine Verschiebung des Hohlkolbens 20 in den Zylinder 10 hinein ermöglicht, wodurch der mit dem Zylinder 10 verbundene Drosseldorn 30 gleichzeitig in das Drosselrohr 70 des Hohlkolbens 20 hinein verschoben wird.

Eine derartige Verschiebung des Drosselrohres 30 in den Hohlkolben 20 hinein erfolgt solange, bis der Drosseldorn von seinem ersten Zustand in seinen zweiten Zustand überführt ist. In seinem zweiten Zustand (Fig. 7) ist die mindestens eine erste Radialbohrung 38 über Dichtungselemente 76 von dem hinteren Hydraulikkammerbereich 12 getrennt. Sollte die Stoßkraft die im normalen Fahrbetrieb auftretenden Grenzwerte nicht überschreiten, so wird diese durch den soeben beschriebenen Mechanismus vollkommen reversibel verzehrt.

Im Crashfall, bei welchem unerwartet hohe Stoßkräfte auftreten, erfolgt die Abdämpfung der Druckkräfte zusätzlich über das Überlastventil 60. Stoßkräfte, die nicht vollständig durch den oben beschriebenen Mechanismus abgedämpft werden können, führen dazu, dass der Drosseldorn zunächst wie oben beschrieben in seinen zweiten Zustand überführt wird, wonach vorerst keine Dämpfung über den Überströmbereich 41 bzw. das Multiplikatorventil 50 erfolgt.

In diesem in Fig. 7 dargestellten Fall kann dennoch weitere Stoßenergie über das Überlastventil 60 aufgefangen werden, wie dies durch den Doppelpfeil in Fig. 7 angedeutet ist. Sollte die Stoßenergie dazu ausreichen, das Überlastventil 60 zu öffnen, so wird diese über den dadurch entstehenden Überlast-Durchlassspalt 61 weiter abgedämpft. Dazu muss der Überdruck im hinteren Hydraulikkammerbereich 12 ausreichend sein, um das Ventil 60 gegen die Rückstellkraft der Feder 63 aus dem Ventilsitz zu drücken. In diesem Fall wird eine dämpfende Wirkung durch den Druckabfall am Überlast-Durchlassspalt solange erzielt, bis der Hohlkolben 20 komplett in den Zylinder 10 hineingeschoben ist. Mit anderen Worten, der Drosseldorn 30 wird bei diesem Mechanismus nun komplett in den Hohlkolben 20 hinein verschoben, bis auch der zweite Hub für den Crashfall aufgezehrt ist. Erst wenn der komplette zweite Hub verzehrt ist, ist mit einer Verformung der erfindungsgemäßen Vorrichtung, d.h. mit einem bleibenden Schaden, zu rechnen.

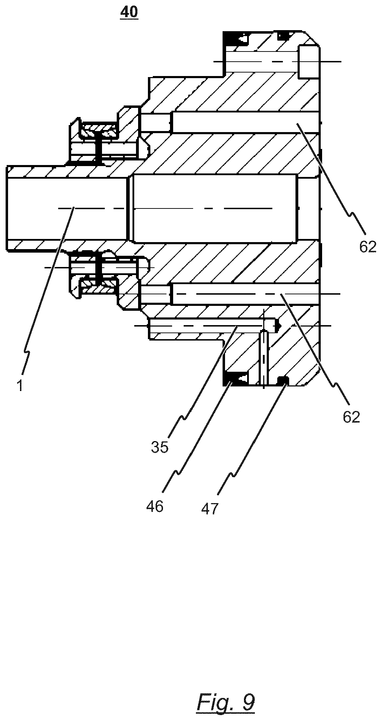

In Fig. 9 ist eine alternative Ausführungsform der erfindungsgemäßen Ventilanordnung 40 gezeigt. Diese Ausführungsform unterscheidet sich insbesondere von der in Fig. 5 dargestellten Ventilanordnung 40 dadurch, dass hier kein Multiplikatorventil verwendet wird. Auch kommen bei der Ventilanordnung 40 gemäß der Darstellung in Fig. 9 keine Überlastventile in Gestalt von Kugelventilen zum Einsatz. Vielmehr sind bei der Ausführungsform gemäß Fig. 9 zwei Überlastkanäle 62 vorgesehen, deren in Richtung des vorderen Hydraulikkammerbereiches 13 zeigenden Endflächen über Planflächen abgedichtet sind. Wie auch bei der Ventilanordnung 40 gemäß Fig. 5 ist die in Fig. 9 dargestellte Ausführungsform mit einem entsprechenden Kompensationskanal 35 versehen.

Die Erfindung ist nicht auf die unter Bezugnahme auf die beigefügten Zeichnungen beschriebene Ausführungsform beschränkt. Vielmehr sind entsprechende Modifikationen im Rahmen der angehängten Ansprüche denkbar.

### Bezugszeichenliste

- 1: Mittenachse
- 10: Zylinder, insbesondere Kreiszylinder
- 11: Hydraulikkammer
- 12: hinterer Hydraulikkammerbereich der Hydraulikkammer
- 13: vorderer Hydraulikkammerbereich der Hydraulikkammer
- 20: Hohlkolben
- 21: Gasraum
- 22: erstes Hohlkolben-Dichtungselement
- 23: zweites Hohlkolben-Dichtungselement
- 24: nicht eingeschobener Außenbereich des Hohlkolbens
- 25: Trennkolben
- 26: Trennkolben-Dichtungselement
- 27: Füllventil
- 28: Ausnehmung
- 30: Drosseldorn
- 31: Drosselspalt
- 32: Rückschlagventil
- 34: Rückflusskanal
- 35: Kompensationskanal
- 36: Hohlraum
- 38: erste Radialbohrung
- 39: zweite Radialbohrung
- 40: Ventilanordnung
- 41: Überströmbereich der Ventilanordnung
- 42: Kanal des Überströmbereichs
- 43: exzentrischer Hydraulikraum
- 44: Ringraum
- 45: Gehäuse der Ventilanordnung
- 46: Ventilanordnungs-Dichtungselement
- 47: Kolbenring
- 50: Multiplikatorventil
- 51: vordere Wirkfläche des Multiplikatorventils
- 52: hintere Wirkfläche des Multiplikatorventils
- 53: Durchlassspalt des Multiplikatorventils
- 54: hintere Ventilkammer des Multiplikatorventils
- 60: Überlastventil
- 61: Überlast-Durchlassspalt
- 62: Überlastkanal
- 63: Feder des Überlastventils
- 70: Drosselrohr
- 72: Hohlraum
- 74: zweites Dichtungselement
- 76: erstes Dichtungselement
- 77-1, 77-2: Schaftsegment
- 78: Dichtungsring
- 79: Anschlag
- 80: Verschlusselement
- 100: Vorrichtung zum Abdichten von Druckkräften

## Patentansprüche

1. Vorrichtung (100) zum Abdämpfen von Druckkräften, wobei die Vorrichtung (100) folgendes aufweist:
- einen Zylinder (10), insbesondere Kreiszylinder, in welchem eine Hydraulikkammer (11) ausgebildet ist;
- einen relativ zum Zylinder (10) teleskopartig entlang einer Mittenachse (1) verschiebbaren Hohlkolben (20);
- eine an einem Endbereich des Hohlkolbens (20) ausgebildete Ventilanordnung (40) zum Unterteilen der Hydraulikkammer (11) in einen hinteren Hydraulikkammerbereich (12) und einen vorderen Hydraulikkammerbereich (13); und
- einen im Hohlkolben (20) entlang der Mittenachse (1) beweglich angeordneten Trennkolben (25), welcher einen innerhalb des Hohlkolbens (20) gebildeten Gasraum (21) von dem vorderen Hydraulikkammerbereich (13) trennt,
wobei die Ventilanordnung (40) einen mit dem hinteren Hydraulikkammerbereich (12) verbundenen Überströmbereich (41) aufweist, welcher derart ausgebildet ist, dass Hydraulikflüssigkeit von dem hinteren Hydraulikkammerbereich (12) in den vorderen Hydraulikkammerbereich (13) strömen kann, wobei in einen Verbindungsbereich zwischen dem hinteren Hydraulikkammerbereich (12) und dem Überströmbereich (41) ein am Zylinder (10) befestigter Drosseldorn (30) hineinragt, welcher ausgebildet ist, die Strömungsgeschwindigkeit von Hydraulikflüssigkeit vom hinteren Hydraulikkammerbereich (12) in Richtung des Überströmbereichs (41) zu kontrollieren;
wobei der Drosseldorn von einem ersten Zustand, in welchem Hydraulikflüssigkeit vom hinteren Hydraulikkammerbereich (12) in den Überströmbereich (41) strömen kann, in einen zweiten Zustand, in welchem der hintere Hydraulikkammerbereich (12) fluiddicht vom Überströmbereich (41) getrennt ist, überführbar ist; und
wobei die Ventilanordnung (40) ferner ein Überlastventil (60) aufweist, welches über mindestens einen Überlastkanal (62) in Verbindung mit dem hinteren Hydraulikkammerbereich (12) steht, wobei im geöffneten Zustand des Überlastventils (60) ein Überlast-Durchlassspalt (61) ein Überströmen von Hydraulikflüssigkeit aus dem hinteren Hydraulikkammerbereich (12) in den vorderen Hydraulikkammerbereich (13) ermöglicht, wobei das Überlastventil (60) derart ausgebildet ist, dass dieses nur dann in den geöffneten Zustand überführbar ist, solange der Drosseldorn in seinem zweiten Zustand ist.

2. Vorrichtung (100) nach Anspruch 1,
wobei der Drosseldorn (30) einen Hohlraum (36) zur Aufnahme von Hydraulikflüssigkeit im Inneren des Drosseldorns (30) sowie mindestens eine erste Radialbohrung (38) an einem proximalen Ende des Holraums aufweist, wobei die mindestens eine erste Radialbohrung ausgelegt ist, im ersten Zustand des Drosseldorns (30) ein Überströmen von Hydraulikflüssigkeit von dem hinteren Hydraulikkammerbereich (12) in den Hohlraum (36) zu ermöglichen.

3. Vorrichtung (100) nach Anspruch 2,
wobei der Hohlraum (36) des Drosseldorns an einem distalen Ende ein lösbares Verschlusselement (80) aufweist, welches ausgelegt ist, den Hohlraum (36) des Drosseldorns (30) gegenüber dem Überströmbereich (41) der Ventilanordnung (40) verschließbar auszugestalten.

4. Vorrichtung (100) nach Anspruch 3,
wobei der Drosseldorn (30) ferner mindestens eine zweite Radialbohrung (39) zwischen dem distalen und proximalen Ende des Hohlraums (36) aufweist, wobei die mindestens eine zweite Radialbohrung (39) ausgelegt ist, im ersten Zustand des Drosseldorns (30) ein Überströmen von Hydraulikflüssigkeit von dem Hohlraum (36) in den Überströmbereich (41) zu ermöglichen.

5. Vorrichtung (100) nach einem der vorhergehenden Ansprüche,
wobei das Überlastventil (60) mittels einer Feder (63), vorzugsweise einer Ringfeder, in seinen Ventilsitz gepresst wird.

6. Vorrichtung (100) nach einem der vorhergehenden Ansprüche,
wobei das Überlastventil (60) als Kugelrückschlagventil ausgebildet ist.

7. Vorrichtung (100) nach einem der vorhergehenden Ansprüche,
wobei die zum Öffnen des Überlastventils (60) erforderliche Schaltkraft vorab festlegbar ist.

8. Vorrichtung (100) nach einem der vorhergehenden Ansprüche,
wobei die Ventilanordnung (40) ferner ein Rückschlagventil (32), insbesondere Kugelventil aufweist, wobei das Rückschlagventil (32) derart angeordnet ist, dass es ein Rückströmen der Hydraulikflüssigkeit aus dem vorderen Hydraulikkammerbereich (13) in den Überströmbereich (41) und/oder in den hinteren Hydraulikkammerbereich (12) genau dann ermöglicht, wenn der Druck im vorderen Hydraulikkammerbereich (13) größer ist als mindestens einer der Drücke im Überströmbereich (41) oder im hinteren Hydraulikkammerbereich (12).

9. Vorrichtung (100) nach einem der vorhergehenden Ansprüche,
wobei die Ventilanordnung ein Drosselrohr (70) aufweist, welches entlang der Mittenachse (1) angeordnet und derart als Hohlzylinder ausgebildet ist, dass der Überströmbereich (41) in einem Innenvolumen des Hohlzylinders ausgebildet ist, und wobei der Trennkolben (25) eine Ausnehmung aufweist, welche entlang der Mittenachse (1) angeordnet und ausgelegt ist, einen dem Trennkolben (25) zugewandten Endbereich des Drosselrohrs (70) und/oder des Drosseldorns (30) aufzunehmen.

10. Vorrichtung (100) nach Anspruch 9,
wobei das Drosselrohr (70) an einem dem Drosseldorn (30) abgewandten Endbereich teleskopartig ausgebildet ist.

11. Vorrichtung (100) nach einem der vorhergehenden Ansprüche,
wobei der Trennkolben (25) mindestens ein Trennkolben-Dichtungselement (26) aufweist, welches ein Abstreifen von Hydraulikflüssigkeit während des abgedichteten Verschiebens des Trennkolbens (25) innerhalb des Hohlkolbens (20) dahingehend gewährleistet, dass im Wesentlichen keine Hydraulikflüssigkeit in den Gasraum (21) gelangt.

12. Vorrichtung (100) nach einem der vorhergehenden Ansprüche,
wobei die Ventilanordnung (40) einen über mindestens einen Kanal (42) mit dem Überströmbereich (41) verbundenen exzentrischen Hydraulikraum (43) und ferner mindestens ein exzentrisch angeordnetes Multiplikatorventil (50) aufweist, und wobei die hintere Wirkfläche (52) des Multiplikatorventils (50) mit dem exzentrischen Hydraulikraum (43) und die vordere Wirkfläche (51) des Multiplikatorventils (50) mit dem vorderen Hydraulikkammerbereich (13) in hydraulischer Wirkverbindung stehen, so dass bei geöffnetem Multiplikatorventil (50) Hydraulikflüssigkeit aus dem exzentrischen Hydraulikraum (43) in den vorderen Hydraulikkammerbereich (13) strömt.

13. Vorrichtung (100) nach Anspruch 12,
wobei das Überlastventil derart ausgebildet ist, dass die zum Öffnen des Überlastventils (60) erforderliche Schaltkraft wesentlich höher als die zum Öffnen des Multiplikatorventils erforderliche Schaltkraft ist.

14. Verwendung der Vorrichtung (100) nach einem der Ansprüche 1 bis 13 als regeneratives Energieverzehrelement in einem spurgeführten Fahrzeug, insbesondere Schienenfahrzeug.

15. Spurgeführtes Fahrzeug, insbesondere Schienenfahrzeug, mit einer Vorrichtung (100) nach einem der Ansprüche 1 bis 13.

## Claims

1. A device for damping for compressive forces, wherein the device (100) comprises the following:
- a cylinder (10), in particular a circular cylinder, in which a hydraulic chamber (11) is formed;
- a hollow piston (20) telescopically displaceable along a center axis (1) relative to the cylinder (10);
- a valve assembly (40) formed at an end region of the hollow piston (20) to divide the hydraulic chamber (11) into a rear hydraulic chamber area (12) and a front hydraulic chamber area (13); and
- a separating piston (25) arranged in the hollow piston (20) so as to be movable along the center axis (1) which separates a gas region (21) formed within the hollow piston (20) from the front hydraulic chamber area (13),
wherein the valve assembly (40) comprises an overflow area (41) connected to the rear hydraulic chamber area (12) which is designed such that hydraulic fluid can flow from the rear hydraulic chamber area (12) into the front hydraulic chamber area (13), wherein a throttle pin (30) fixed to the cylinder (10) and designed to control the flow rate of hydraulic fluid from the rear hydraulic chamber area (12) toward the overflow area (41) protrudes into a connecting area between the rear hydraulic chamber area (12) and the overflow area (41);
wherein the throttle pin von can be conveyed from a first state, in which hydraulic fluid from the rear hydraulic chamber area (12) can flow into the overflow area (41), into a second state in which the rear hydraulic chamber area (12) is separated from the overflow area (41) so as to be fluid-tight; and
wherein the valve assembly (40) further comprises an overload valve (60) which is connected to the rear hydraulic chamber area (12) by at least one overload channel (62), wherein an overload passage gap (61) enables an overflow of hydraulic fluid from the rear hydraulic chamber area (12) into the front hydraulic chamber area (13) in the open state of the overload valve (60), wherein the overload valve (60) is designed such that it can only be conveyed into the open state as long as the throttle pin is in its second state.

2. The device (100) according to claim 1,
wherein the throttle pin (30) has a cavity (36) for accommodating hydraulic fluid within said throttle pin (30) as well as at least one first radial bore (38) at a proximal end of the cavity, wherein the at least one first radial bore is configured to enable an overflow of hydraulic fluid from the rear hydraulic chamber area (12) into the cavity (36) in the first state of the throttle pin (30).

3. The device (100) according to claim 2,
wherein the cavity (36) of the throttle pin comprises a releasable closure element (80) at a distal end which is configured to structure the cavity (36) of the throttle pin (30) so as to be closable relative the overflow area (41) of the valve assembly (40).

4. The device (100) according to claim 3,
wherein the throttle pin (30) further comprises at least one second radial bore (39) between the distal and proximal end of the cavity (36), wherein the at least one second radial bore (39) is configured to enable an overflow of hydraulic fluid from the cavity (36) into the overflow area (41) in the first state of the throttle pin (30).

5. The device (100) according to one of the preceding claims,
wherein the overload valve (60) is pressed into its valve seat by a spring (63), preferably an annular spring.

6. The device (100) according to one of the preceding claims,
wherein the overload valve (60) is designed as a ball check valve.

7. The device (100) according to one of the preceding claims,
wherein the operating force required to open the overload valve (60) is predefinable.

8. The device (100) according to one of the preceding claims,
wherein the valve assembly (40) further comprises a check valve (32), in particular a ball valve, wherein the check valve (32) is arranged such that it enables a return flow of the hydraulic fluid from the front hydraulic chamber area (13) to the overflow area (41) and/or the rear hydraulic chamber area (12) if and only if the pressure in the front hydraulic chamber area (13) is greater than at least one of the pressures in the overflow area (41) or rear hydraulic chamber area (12).

9. The device (100) according to one of the preceding claims,
wherein the valve assembly comprises a throttle rube (70) which is arranged along the center axis (1) and designed as a hollow cylinder such that the overflow area (41) is formed in an inner volume of the hollow cylinder, and wherein the separating piston (25) exhibits a recess arranged along the center axis (1) and designed to receive an end region of the throttle tube (70) and/or throttle pin (30) facing the separating piston (25).

10. The device (100) according to claim 9,
wherein the throttle tube (70) is of telescopic design at the far end region from the throttle pin (30).

11. The device (100) according to one of the preceding claims,
wherein the separating piston (25) comprises at least one separating piston sealing element (26) which ensures hydraulic fluid is wiped off during the sealed displacing of the separating piston (25) within the cavity (20) to the effect of essentially no hydraulic fluid reaching the gas region (21).

12. The device (100) according to one of the preceding claims,
wherein the valve assembly (40) exhibits an eccentric hydraulic region (43) connected to the overflow area (41) via at least one channel (42) as well as at least one eccentrically arranged multiplier valve (50), and wherein the rear effective area (52) of the multiplier valve (50) is in hydraulic operative connection with the eccentric hydraulic region (43) and the front effective area (51) of the multiplier valve (50) is in hydraulic operative connection with the front hydraulic chamber area (13) so that hydraulic fluid flows out of the eccentric hydraulic region (43) into the front hydraulic chamber area (13) when the multiplier valve (50) is open.

13. The device (100) according to claim 12,
wherein the overload valve is designed such that the operating force required to open the overload valve (60) is substantially higher than the operating force required to open the multiplier valve.

14. Use of the device (100) according to one of claims 1 to 13 as a regenerative energy dissipation element in a track-bound vehicle, in particular a railway vehicle.

15. A track-bound vehicle, in particular a railway vehicle, having a device (100) in accordance with one of claims 1 to 13.

## Revendications

1. Dispositif (100) pour amortir des forces de compression, le dispositif (100) comprenant ce qui suit :
- un cylindre (10), en particulier un cylindre à base circulaire, dans lequel est ménagée une chambre hydraulique (11) ;
- un piston creux (20) déplaçable en translation par rapport au cylindre (10) de manière télescopique le long d'un axe médian (1) ;
- un agencement de valve (40) réalisé à une zone terminale du piston creux (20) pour subdiviser la chambre hydraulique (11) en une zone postérieure de chambre hydraulique (12) et une zone antérieure de chambre hydraulique (13) ; et
- un piston de séparation (25) agencé dans le piston creux (20) déplaçable le long de l'axe médian (1), qui sépare une chambre à gaz (21) formée à l'intérieur du piston creux (20) vis-à-vis de la zone antérieure de chambre hydraulique (13),
dans lequel l'agencement de valve (40) comprend une zone de déversement (41) reliée à la zone postérieure de chambre hydraulique (12), ladite zone de déversement étant réalisée de telle façon que le fluide hydraulique peut s'écouler depuis la zone postérieure de chambre hydraulique (12) jusque dans la zone antérieure de chambre hydraulique (13), et une broche d'étranglement (30) fixée sur le cylindre (10) pénètre dans une zone de liaison entre la zone postérieure de chambre hydraulique (12) et la zone de déversement (41), ladite broche d'étranglement étant réalisée de manière à contrôler la vitesse d'écoulement du liquide hydraulique depuis la zone postérieure de chambre hydraulique (12) en direction de la zone de déversement (41) ;
dans lequel la broche d'étranglement est susceptible d'être transférée depuis un premier état dans lequel le liquide hydraulique est capable de s'écouler de la zone postérieure de chambre hydraulique (12) vers la zone de déversement (41), jusque dans un deuxième état dans lequel la zone postérieure de chambre hydraulique (12) est séparée de façon étanche aux fluides par rapport à la zone de déversement (41) ; et
dans lequel l'agencement de valve (40) comprend en outre une valve de surcharge (60) qui communique, via au moins un canal de surcharge (62), avec la zone postérieure de chambre hydraulique (12), de sorte que dans l'état ouvert de la valve de surcharge (60) un intervalle traversant de surcharge (61) permet un déversement du liquide hydraulique hors de la zone postérieure de chambre hydraulique (12) jusque dans la zone antérieure de chambre hydraulique (13), et la valve de surcharge (60) est réalisée de telle façon que celle-ci ne peut être transférée vers l'état ouvert que tant que la broche d'étranglement est dans son second état.

2. Dispositif (100) selon la revendication 1,
dans lequel la broche d'étranglement (30) comporte une chambre creuse (36) pour recevoir du liquide hydraulique à l'intérieur de la broche d'étranglement (30) ainsi qu'au moins un perçage radial (38) à une extrémité proximale de la chambre creuse, et ledit au moins un perçage radial est conçu pour permettre, dans le premier état de la broche d'étranglement (30), un déversement du liquide hydraulique depuis la zone postérieure de chambre hydraulique (12) jusque dans la chambre creuse (36).

3. Dispositif (100) selon la revendication 2,
dans lequel la chambre creuse (36) de la broche d'étranglement comporte, à une extrémité distale, un élément de fermeture libérable (80) qui est conçu pour que la chambre creuse (36) de la broche d'étranglement (30) soit réalisée de manière à pouvoir être obturée par rapport à la zone de déversement (41) de l'agencement de valve (40).

4. Dispositif (100) selon la revendication 3,
dans lequel la broche d'étranglement (30) comporte en outre au moins un deuxième perçage radial (39) entre l'extrémité distale et l'extrémité proximale de la chambre creuse (36), et ledit au moins un deuxième perçage radial (39) est conçu pour permettre, dans le premier état de la broche d'étranglement (30), un déversement de liquide hydraulique depuis la chambre creuse (36) jusque dans la zone de déversement (41).

5. Dispositif (100) selon l'une des revendications précédentes,
dans lequel la valve de surcharge (60) est pressée dans son siège de valve au moyen d'un ressort (63), de préférence un ressort annulaire.

6. Dispositif (100) selon l'une des revendications précédentes,
dans lequel la valve de surcharge (60) est réalisée sous la forme d'un clapet antiretour à bille.

7. Dispositif (100) selon l'une des revendications précédentes,
dans lequel la force de commutation requise pour ouvrir la valve de surcharge (60) et susceptible d'être fixée au préalable.

8. Dispositif (100) selon l'une des revendications précédentes,
dans lequel l'agencement de valve (40) comprend en outre un clapet antiretour (32), en particulier un clapet à bille, et le clapet antiretour (32) est agencé de telle façon qu'il permet un écoulement en retour du liquide hydraulique hors de la zone antérieure de chambre hydraulique (13) jusque dans la zone de déversement (41) et/ou jusque dans la zone postérieure de chambre hydraulique (12) précisément quand la pression dans la zone antérieure de chambre hydraulique (13) est plus élevée que l'une au moins des pressions dans la zone de déversement (41) ou dans la zone postérieure de chambre hydraulique (12).

9. Dispositif (100) selon l'une des revendications précédentes,
dans lequel l'agencement de valve comprend un tube à étranglement (70), lequel est agencé le long de l'axe médian (1) et est réalisé sous la forme d'un cylindre creux de telle façon que la zone de déversement (41) est ménagée dans un volume intérieur du cylindre creux, et dans lequel le piston de séparation (25) comporte un évidement qui est agencé le long de l'axe médian (1) et qui est conçu pour recevoir une zone terminale du tube à étranglement (70) tournée vers le piston de séparation (25) et/ou la broche d'étranglement (30).

10. Dispositif (100) selon la revendication 9,
dans lequel le tube d'étranglement (70) est réalisé de façon télescopique dans une zone terminale détournée de la broche d'étranglement (30).

11. Dispositif (100) selon l'une des revendications précédentes,
dans lequel le piston de séparation (25) comporte au moins un élément d'étanchéité de piston (26), qui assure un raclage du liquide hydraulique pendant la translation avec étanchement du piston de séparation (25) à l'intérieur du piston creux (20) de telle sorte qu'il ne parvient essentiellement aucun liquide hydraulique dans la chambre à gaz (21).

12. Dispositif (100) selon l'une des revendications précédentes,
dans lequel l'agencement de valve (40) comprend une chambre hydraulique excentrique (43) reliée à la zone de déversement (41) via au moins un canal (42) est en outre au moins une valve multiplicatrice (50) agencée de manière excentrique, et dans lequel la surface active postérieure (52) de la valve multiplicatrice (50) communique sur le plan hydraulique avec la chambre hydraulique excentrique (43) et la surface active antérieure (51) de la valve multiplicatrice (50) communique sur le plan hydraulique avec la zone antérieure de chambre hydraulique (13), de telle sorte que lorsque la valve multiplicatrice (50) est ouverte, le liquide hydraulique s'écoule hors de la chambre hydraulique excentrique (43) jusque dans la zone antérieure de chambre hydraulique (13).

13. Dispositif (100) selon la revendication 12,
dans lequel la valve de surcharge est réalisée de telle façon que la force de commutation requise pour ouvrir la valve de surcharge (60) est sensiblement plus élevée que la force de commutation requise pour ouvrir la valve multiplicatrice.

14. Utilisation du dispositif (100) selon l'une des revendications à 13, à titre d'élément d'absorption d'énergie régénératif dans un véhicule guidé sur voie, en particulier un véhicule ferroviaire.

15. Véhicule guidé sur voie, en particulier véhicule ferroviaire, comprenant un dispositif (100) selon l'une des revendications 1 à 13.
